# EUROPÄISCHE PATENTSCHRIFT

(11) **EP 1 303 154 B1**
(45) Veröffentlichungstag und Bekanntmachung des Hinweises auf die Patenterteilung: **15.09.2004**
(21) Anmeldenummer: 03000736.3
(22) Anmeldetag: 11.04.2000
(51) Int. Cl.: H04Q 7/32

(54) **Chipkarte und Verfahren zur Dekomprimierung und/oder Komprimierung von empfangenen bzw. zu sendenden Nachrichten**
Chip card and method for decompression and compression of received or sent data respectively
Carte à puce et méthode de decompression ou compression des données reçues ou à envoyer

(30) Priorität: 20.07.1999 EP 99114134
(43) Veröffentlichungstag der Anmeldung: 16.04.2003
(62) Teilanmeldung aus: 00920687.1
(73) Patentinhaber: SIEMENS AKTIENGESELLSCHAFT, 80333 München (DE)
(72) Erfinder: Pusl, Stefan, 84405 Dorfen (DE); Sasse, Jörg, 80995 München (DE)

(56) Entgegenhaltungen:
- EP-A- 0 802 694
- EP-A- 0 869 691
- WO-A-97/48212

## Beschreibung

In dem weltweit verbreiteten Mobilfunksystem nach dem GSM-Standard (Global System for Mobile Communication) gibt es die Möglichkeit Textnachrichten zu übertragen. Dies kann sowohl zwischen zwei Teilnehmerendgeräten (Point to Point) oder auch zu einer Vielzahl von Teilnehmerendgeräten (Broadcast Mode) geschehen. Da die Übertragungsrate bzw. die Anzahl der zu übertragenden Zeichen pro Nachricht begrenzt ist, besteht ein Bedürfnis zur Kompression (auch: Komprimierung) der zu überragenden Textnachrichten.

Aus der WO-A-98/11746 ist eine Chipkarte (SIM-Karte) zur Verwendung in einem Mobilfunkgerät bekannt, in der die erforderlichen Daten zur besseren Ausnutzung der begrenzten Speicherkapazität komprimiert abgespeichert werden.

Der vorliegenden Erfindung liegt die Aufgabe zugrunde, eine technische Lehre anzugeben, mit der die Kompression und Dekompression von Textnachrichten in einer Weise möglich ist, die den besonderen Anforderungen der Übertragung von Textnachrichten über Mobilfunksysteme angemessen ist. Diese Aufgabe wird gemäß der vorliegenden Erfindung durch eine Chipkarte nach Anspruch 1 und durch ein Verfahren zur Dekomprimierung einer empfangenen Nachricht sowie zur Komprimierung einer zu sendenden Nachricht in einem Kommunikationsendgerät gemäß Anspruch 2 gelöst.

Die erfindungsgemäße Idee basiert dabei auf dem Gedanken, in Mobilfunkendgeräten üblicherweise vorhandene Teilnehmeridentitätsmodule (subscriber identity module, SIM) mit Funktionen zur Dekomprimierung und bzw. oder Komprimierung von empfangenen oder zu sendenden Nachrichten auszustatten. Diese Lösung hat verschiedene Vorteile. Zum einen kann ein Netzbetreiber seinen eigenen Komprimierungs- und Dekomprimierungsalgorithmus verwenden. Zum anderen können bereits im Markt vorhandene Mobilfunkgeräte, die entsprechende Teilnehmeridentitätsmodule unterstützen, durch die Verwendung eines neuen Teilnehmeridentitätsmoduls oder aber durch Umkonfiguration eines vorhandenen Teilnehmeridentitätsmoduls um das beschriebene Funktionsmerkmal erweitert werden.

Im folgenden wird die Erfindung anhand bevorzugter Ausführungsbeispiele und mit Hilfe einer Figur näher beschrieben.

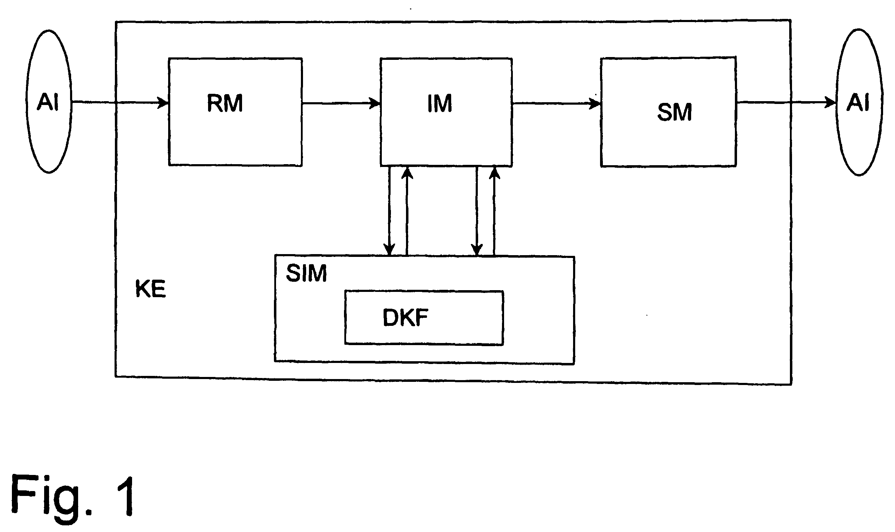

Figur 1 zeigt eine schematische Darstellung eines Kommunikationsendgerätes (KE) gemäß der vorliegenden Erfindung. Dieses Kommunikationsendgerät umfaßt Mittel zum Empfang (RM) und zum Senden (SM) von Nachrichten und Mittel (IM) zur Interaktion mit einem durch einen Benutzer austauschbaren Teilnehmeridentitätsmodul (SIM). Dabei umfaßt das Teilnehmeridentitätsmodul Funktionen (DKF) zur Dekomprimierung und Komprimierung von empfangenen oder zu sendenden Nachrichten. Die Nachrichten werden über eine sogenannte Luftschnittstelle (AI) empfangen oder gesendet.

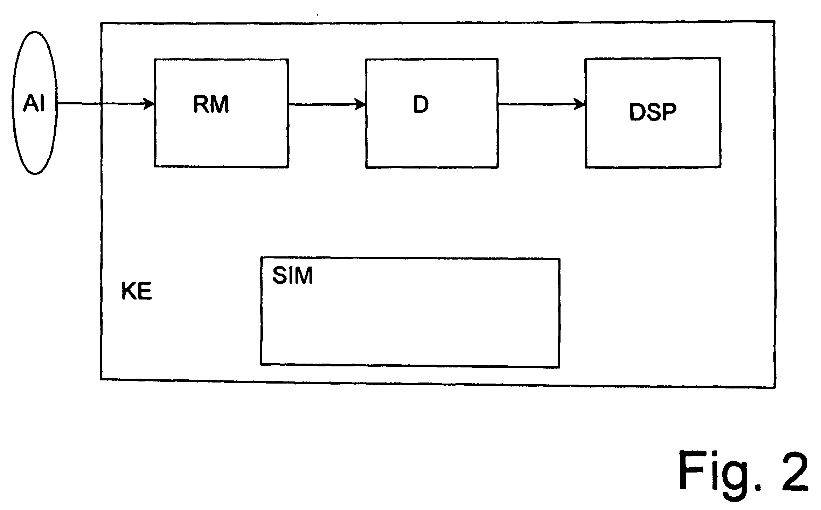

Figur 2 zeigt in schematischer Weise den Ablauf der Dekomprimierung auf herkömmliche Weise (Stand der Technik).

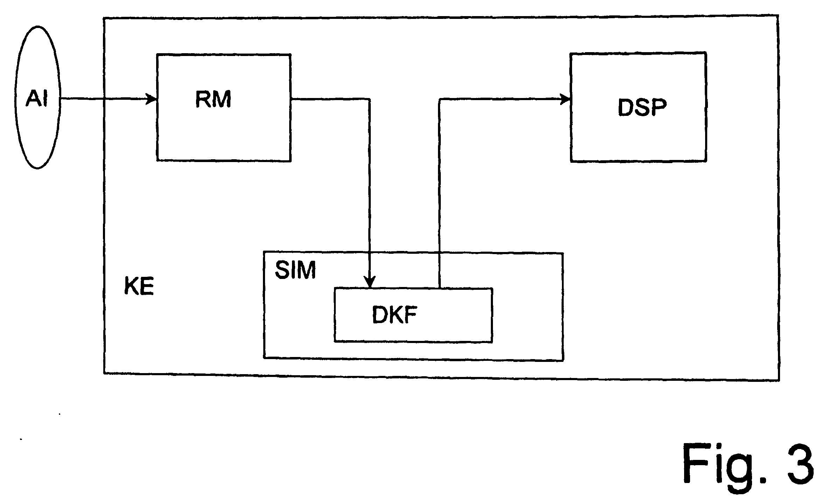

Figur 3 zeigt in schematischer Weise den Ablauf der Dekomprimierung gemäß der vorliegenden Erfindung.

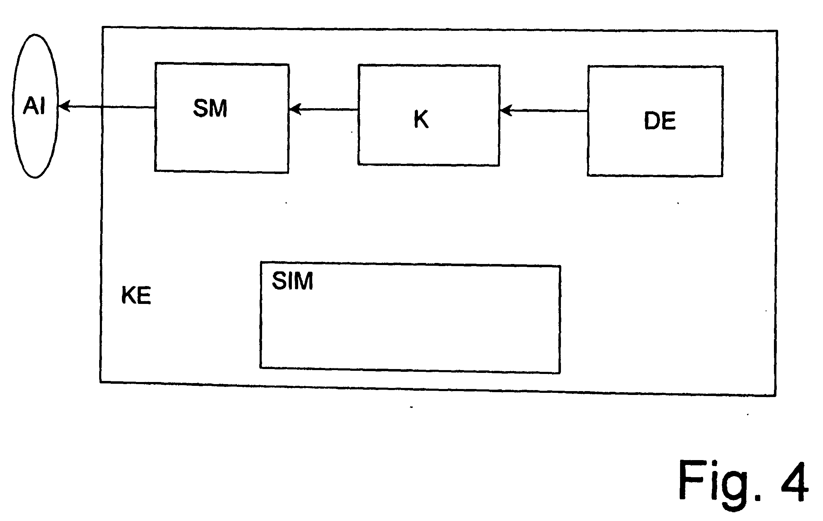

Figur 4 zeigt in schematischer Weise den Ablauf der Komprimierung auf herkömmliche Weise (Stand der Technik).

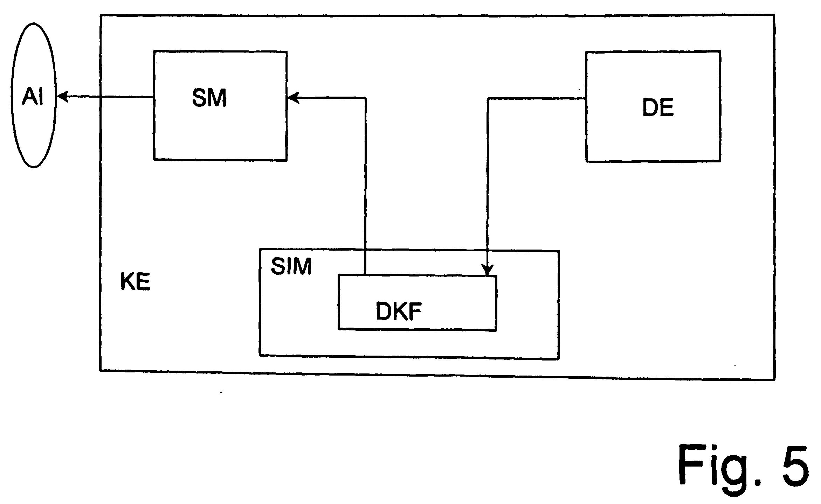

Figur 5 zeigt in schematischer Weise den Ablauf der Komprimierung gemäß der vorliegenden Erfindung

Im folgenden wird die Erfindung mit Hilfe bevorzugter Ausführungsbeispiele und anhand der Figuren näher beschrieben.

Gemäß der Erfindung sind sämtliche Funktionen zur Dekomprimierung und Komprimierung von empfangenen oder zu sendenden Nachrichten durch Einrichtung oder Softwareobjekte realisiert, die dem Teilnehmeridentitätsmodul (SIM) und nicht dem Endgerät zugeordnet sind.

Bei einem Verfahren zur Dekomprimierung einer empfangenen Nachricht in einem Kommunikationsendgerät gemäß der vorliegenden Erfindung, erkennt eine Einrichtung des Endgerätes anhand eines Merkmales dieser Nachricht (z.B. sog. Message-Header), daß es sich um eine komprimierte Nachricht handelt. Dieselbe Einrichtung oder eine weitere Einrichtung des Endgerätes gibt daraufhin diese Nachricht an das Teilnehmeridentitätsmodul zur Dekomprimierung weiter.

Bei der Komprimierung einer zu sendenden Nachricht in einem Kommunikationsendgerät gemäß der vorliegenden Erfindung wird eine zu sendende Nachricht zur Komprimierung an das Teilnehmeridentitätsmodul weitergegeben und dort mit Hilfe von Funktionen, die dem Teilnehmeridentitätsmodul zugeordnet sind komprimiert und nach der Komprimierung an das Endgerät zum Senden zurückgegeben.

Durch die vorliegende Erfindung wird der Algorithmus zum Komprimieren bzw. Dekomprimieren auf dem sogenannten Teilnehmeridentitätsmodul ausgeführt, welcher auch als Subscriber-Identity-Modul (SIM) bezeichnet wird und in der Regel als Chipkarte realisiert ist. Die empfangenen Textnachrichten werden zum SIM geleitet, die selbständig erkennt, ob die Nachricht komprimiert ist und falls ja, diese entsprechend dem anzuwendenden Algorithmus dekomprimiert. Anschließend kann die dekomprimierte Nachricht zur Anzeige gebracht werden. Sind Textnachrichten zu senden, werden diese vor der eigentlichen Übertragung zum SIM geleitet, wo sie gegebenenfalls komprimiert werden. Dies kann z.B. abhängig von der Anzahl der Zeichen geschehen; bei geringen Datenmengen könnte die Komprimierung auch entfallen.

Die erfindungsgemäße Lösung unterscheidet sich von bekannten Ansätzen zur Datenkompression vor allem dadurch, daß die Komprimierung oder Dekomprimierung nicht durch das Endgerät selbst, sondern durch das austauschbare Teilnehmeridentitätsmodul ausgeführt wird. Dadurch wird eine größtmögliche Flexibilität erreicht.

Das bedeutet nicht unbedingt, daß sämtliche bei der Komprimierung oder Dekomprimierung benötigten oder mitwirkenden Funktionen oder Funktionseinheiten auf dem Teilnehmeridentitätsmodul realisiert werden müssen. Die Vorteile der Erfindung ergeben sich immer dann, wenn man die für ein verwendetes oder zu verwendendes Kompressions- oder Dekompressionsverfahren oder für mehrere solcher Verfahren charakteristischen Funktionen oder Funktionseinheiten auf dem Teilnehmeridentitätsmodul realisiert. Solche für ein Verfahren charakteristischen Funktionen oder Funktionseinheiten können Algorithmen oder sie implementierende Softwaremodule sein. Ferner kann es sich hier um Parametersätze, wie z.B. sprachen- oder länderabhängige Tabellen handeln.

Allgemeine, im Kommunikationsendgerät ohnehin vorhandene und für ein Kompressionsverfahren oder Dekompressionsverfahren nicht spezifische Funktionen oder Funktionseinheiten, wie z.B. Prozessoren, Speichereinheiten etc.,müssen dagegen nicht Bestandteil des Teilnehmeridentitätsmoduls sein. Die Gesamtheit aller zum Verfahrensablauf benötigten Funktionen kann gleichwohl über die Grenzen des Teilnehmeridentitätsmoduls hinweg zusammenarbeiten.

Wird der Teilnehmeridentätsmodul ausgewechselt, werden mit ihm die für ein spezielles Datenkompressions- oder Dekompressionsverfahren charakteristischen Funktionen, Parameter oder ähnliches ausgewechselt. Dadurch ist es möglich, je nach installiertem Typ des Teilnehmeridentätsmoduls unterschiedliche Datenkompressions- oder Dekompressionsverfahren im Zusammenhang mit diesem Endgerät zu verwenden.

## Patentansprüche

1. Chipkarte, insbesondere Teilnehmeridentitätsmodul, zur Verwendung in einem Kommunikationsendgerät, mit Mitteln zur Durchführung einer Komprimierung oder Dekomprimierung von Daten oder mit Mitteln zur Unterstützung von Funktionen im Zusammenhang mit einer Komprimierung oder Dekomprimierung von Daten, die der Chipkarte von einem Kommunikationsendgerät zur Bearbeitung übergeben und nach erfolgter Bearbeitung von der Chipkarte an das Kommunikationsendgerät übergeben werden.

2. Verfahren zur Komprimierung oder Dekomprimierung von Daten, die einer Chipkarte von einem Kommunikationsendgerät zur Bearbeitung übergeben und nach erfolgter Bearbeitung von der Chipkarte an das Kommunikationsendgerät übergeben werden, wobei die Komprimierung oder Dekomprimierung von dieser Chipkarte durchgeführt oder durch Einrichtungen dieser Chipkarte unterstützt wird.

## Claims

1. Chipcard, in particular subscriber identity module, for use in a communications terminal having means for compressing or decompressing data or having means for supporting functions relating to a compression or decompression of data, which is transferred to the chipcard from a communications terminal for processing, and after processing has taken place is transferred from the chipcard to the communications terminal.

2. Method for compressing or decompressing data which is transferred to a chipcard from a communications terminal for processing, and after processing has taken place is transferred from the chipcard to the communications terminal, the compression or decompression being carried out from this chipcard or being supported by devices of this chipcard.

## Revendications

1. Carte à puce, en particulier module d'identification d'abonné, destinée à être utilisée dans un terminal de communication et dotée de moyens pour la réalisation d'une compression ou d'une décompression de données ou de moyens pour le soutien des fonctions associées à une compression ou une décompression de données qui sont transmises à la carte à puce par un terminal de communication pour le traitement et qui sont transmises au terminal de communication après traitement effectué par la carte à puce.

2. Procédé pour la compression ou la décompression de données qui sont transmises à la carte à puce par un terminal de communication pour le traitement et qui, après traitement effectué par la carte à puce, sont transmises au terminal de communication, la compression ou la décompression étant exécutées par cette carte à puce ou étant soutenues par des dispositifs de cette carte à puce.
